# EUROPÄISCHE PATENTSCHRIFT

(11) **EP 1 184 127 B1**
(45) Veröffentlichungstag und Bekanntmachung des Hinweises auf die Patenterteilung: **29.12.2004**
(21) Anmeldenummer: 00117890.4
(22) Anmeldetag: 19.08.2000
(51) Int. Cl.: B23K 26/08, B26D 9/00

(54) **Bearbeitungsvorrichtung für flache Bögen**
Processing device for flat sheets
Dispositif de traitement des feuilles plats

(43) Veröffentlichungstag der Anmeldung: 06.03.2002
(73) Patentinhaber: Lange, Carl Ingolf, 71642 Ludwigsburg (DE)
(72) Erfinder: Lange, Carl Ingolf, 71642 Ludwigsburg (DE)
(74) Vertreter: Kohler Schmid Möbus

(56) Entgegenhaltungen:
- EP-A- 0 447 173
- WO-A-97/37837
- GB-A- 2 066 130
- US-A- 6 007 756
- US-A- 6 028 289

## Beschreibung

Die Erfindung betrifft eine Vorrichtung zur Bearbeitung von flachen Bögen aus nichtmetallenem Material, wie z.B. Papier, Pappe, Wellpappe, Karton, Kunststoff oder dgl., mit einer ersten Stapeleinrichtung zum Bevorraten von zu bearbeitenden Bögen, mit einer zweiten Stapeleinrichtung zum Ablegen von bearbeiteten Bögen, mit einer Fördereinrichtung, die einen Bogen von der ersten Stapeleinrichtung zur zweiten Stapeleinrichtung transportiert, mit mindestens einer zwischen den beiden Stapeleinrichtungen vorgesehenen Laserbearbeitungseinrichtung zum berührungslosen Bearbeiten eines Bogens mittels Laserstrahlung zum Erzeugen von Schnitt- und/oder Falzlinien und mit einer mechanischen Bearbeitungseinrichtung zum Bearbeiten eines Bogens.

Eine derartige Bearbeitungsvorrichtung ist beispielsweise durch die US 6 007 756 A bekannt geworden.

Die aus US 6 007 756 A bekannte Vorrichtung zur Bearbeitung von flachen Bögen umfaßt eine erste Stapeleinrichtung zum Bevorraten von zu bearbeitenden Bögen, eine zweite Stapeleinrichtung zum Ablegen von bearbeiteten Bögen, eine Fördereinrichtung, die einen Bogen von der ersten Stapeleinrichtung zur zweiten Stapeleinrichtung transportiert, eine zwischen den beiden Stapeleinrichtungen vorgesehene Laserbearbeitungseinrichtung zum berührungslosen Bearbeiten eines Bogens mittels Laserstrahlung sowie eine Schneideinrichtung zum mechanischen Bearbeiten eines Bogens. Dabei werden die mit der Schneideinrichtung in hohen Stückzahlen hergestellten Zuschnitte zunächst in der ersten Stapeleinrichtung bevorratet und dann zur Laserbearbeitungseinrichtung gefördert, d.h., die Laserbearbeitungseinrichtung dient der zusätzlichen Weiter- oder Nachbearbeitung von bereits gefertigten Zuschnitten.

Aus der WO 97/37837 A ist weiterhin eine Vorrichtung zur Bearbeitung von Flachmaterial mittels eines Laserstrahls bekannt. Der Laserstrahl wird mittels zweier Spiegel zweidimensional abgelenkt, wodurch sich die Wartezeit für die Herstellung eines ansonsten erforderlichen Stanzwerkzeuges erübrigt.

Es ist daher die Aufgabe der Erfindung, eine Bearbeitungsvorrichtung der eingangs genannten Art derart weiterzubilden, daß auch bei geringen Stückzahlen die Bearbeitung von flachen Bögen mit möglichst geringem Zeit- und Kostenaufwand erreicht werden kann.

Diese Aufgabe wird erfindungsgemäß dadurch gelöst, daß die mechanische Bearbeitungseinrichtung als Stanzeinrichtung ausgebildet und zwischen den beiden Stapeleinrichtungen vor oder hinter der mindestens einen Laserbearbeitungseinrichtung angeordnet ist und daß zur Bearbeitung eines Bogens wahlweise die Stanzeinrichtung und/oder die mindestens eine Laserbearbeitungseinrichtung aktivierbar sind.

Die Bearbeitung mit der Laserbearbeitungseinrichtung erfordert kein individuelles Werkzeug, sondern erfolgt computergesteuert. Im Vergleich zu einer mechanischen Bearbeitungseinrichtung, mittels der ein Zuschnitt in einem einzigen Stanzvorgang aus einem flachen Bogen erhalten wird, dauert die Herstellung eines Zuschnitts mit der Laserbearbeitungseinrichtung zwar länger, da die Laserstrahlung entlang jeder Schnitt- oder Falzlinie des Zuschnitts verfahren werden muß. Dafür muß bei der Umstellung auf eine andere Zuschnittsform lediglich ein anderes Steuerprogramm in den Steuercomputer der Laserbearbeitungseinrichtung geladen werden. Die erfindungsgemäße Bearbeitungsvorrichtung ermöglicht es, bei hohen Stückzahlen die mechanische Bearbeitungsvorrichtung einzusetzen und bei nur geringen Stückzahlen auf die Laserbearbeitungseinrichtung umzuschalten. Es ist auch möglich, die mit der mechanischen Bearbeitungsvorrichtung gefertigten Zuschnitte bei Bedarf noch individuell mit der Laserbearbeitungseinrichtung weiterzubearbeiten. Bei einer besonders bevorzugten Ausführungsform der Erfindung weist die mechanische Bearbeitungseinrichtung eine Einstellung auf, in der die geförderten Bögen ohne Bearbeitung zu der Laserbearbeitungseinrichtung transportiert werden. In diesem Fall werden die Bögen nur mittels der Laserbearbeitungseinrichtung bearbeitet.

Von besonderem Vorteil ist es, wenn die Laserbearbeitungseinrichtung anstelle einer der mechanischen Bearbeitungseinrichtung nachgeordneten, mechanischen oder pneumatischen Nachbearbeitungseinrichtung vorgesehen ist. Zum Beispiel bei einer Stanzeinrichtung als mechanischer Bearbeitungsvorrichtung ist meist eine Nachbearbeitungseinrichtung zum mechanischen oder pneumatischen Auswerfen von ausgestanzten Ausschußteile vorgesehen, die bei der Bearbeitung mittels der Laserbearbeitungseinrichtung, d.h. bei geringen Stückzahlen, nicht zwingend erforderlich ist und daher gegen die Laserbearbeitungseinrichtung ausgewechselt werden kann. So können auch bereits bestehende Bearbeitungsvorrichtungen einfach und leicht mit einer Laserbearbeitungseinrichtung nachgerüstet werden.

Bei neu hergestellten Bearbeitungsvorrichtungen ist die Laserbearbeitungseinrichtung bevorzugt zwischen der mechanischen Bearbeitungseinheit und einer nachgeordneten, mechanischen oder pneumatischen Nachbearbeitungseinrichtung vorgesehen, wobei die mechanische Bearbeitungseinrichtung und/oder die mechanische oder pneumatische Nachbearbeitungseinrichtung jeweils eine Einstellung aufweisen, in der die geförderten Bögen ohne Bearbeitung transportiert werden. Mit einer solchen Bearbeitungsvorrichtung können Bögen wahlweise entweder nur mit der mechanischen Bearbeitungseinrichtung oder nur mit der Laserbearbeitungseinrichtung oder mit beiden bearbeitet werden, wobei die bei der mechanischen und/oder bei der Laserbearbeitung ausgestanzten Ausschußteile mittels der mechanischen Laserbearbeitungseinrichtung entfernt werden können.

Bei einer anderen vorteilhaften Ausführungsform der Erfindung ist die Laserbearbeitungseinrichtung in eine der mechanischen Bearbeitungseinheit nachgeordnete, mechanische oder pneumatische Nachbearbeitungseinrichtung einsetzbar, wobei die Nachbearbeitungseinrichtung bei eingesetzter Laserbearbeitungseinrichtung deaktiviert ist. So können auch bereits bestehende Bearbeitungsvorrichtungen einfach und leicht mit einer Laserbearbeitungseinrichtung nachgerüstet werden.

Vorzugsweise weist die Laserbearbeitungseinrichtung eine bewegliche Ablenkoptik auf, die die Laserstrahlung computergesteuert auf den zu bearbeitenden Bogen ablenkt. Alternativ kann parallel zum zu bearbeitenden Bogen ein Laserbearbeitungskopf verfahren werden, dessen Laserstrahlung etwa rechtwinklig zur Bearbeitungsebene gerichtet ist.

Der Bearbeitungskopf der Laserbearbeitungseinrichtung kann oberhalb oder unterhalb eines zu bearbeitenden Bogens angeordnet sein. Die Laserbearbeitungseinrichtung kann einen oder mehrere Bearbeitungsköpfe aufweisen, die oberhalb und/oder unterhalb eines zu bearbeitenden Bogens angeordnet sind und deren Laserstrahlung jeweils auf den zu bearbeitenden Bogen gerichtet ist.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:
- Fig. 1: in einer Seitenansicht schematisch ein erstes Ausführungsbeispiel einer erfindungsgemäßen Bearbeitungsvorrichtung, bei der die Laserbearbeitungseinrichtung zwischen der mechanischen Bearbeitungseinrichtung und einer mechanischen Nachbearbeitungseinrichtung angeordnet ist;
- Fig. 2: analog zur Darstellung in Fig. 1 ein zweites Ausführungsbeispiel einer erfindungsgemäßen Bearbeitungsvorrichtung, bei der die Laserbearbeitungseinrichtung am Ort einer aus dem Bearbeitungsbereich verfahrenen mechanischen Nachbearbeitungseinrichtung angeordnet ist; und
- Fig. 3: analog zur Darstellung in Fig. 1 ein drittes Ausführungsbeispiel einer erfindungsgemäßen Bearbeitungsvorrichtung, bei der eine mechanische Nachbearbeitungseinrichtung gegen die Laserbearbeitungseinrichtung ausgewechselt ist.

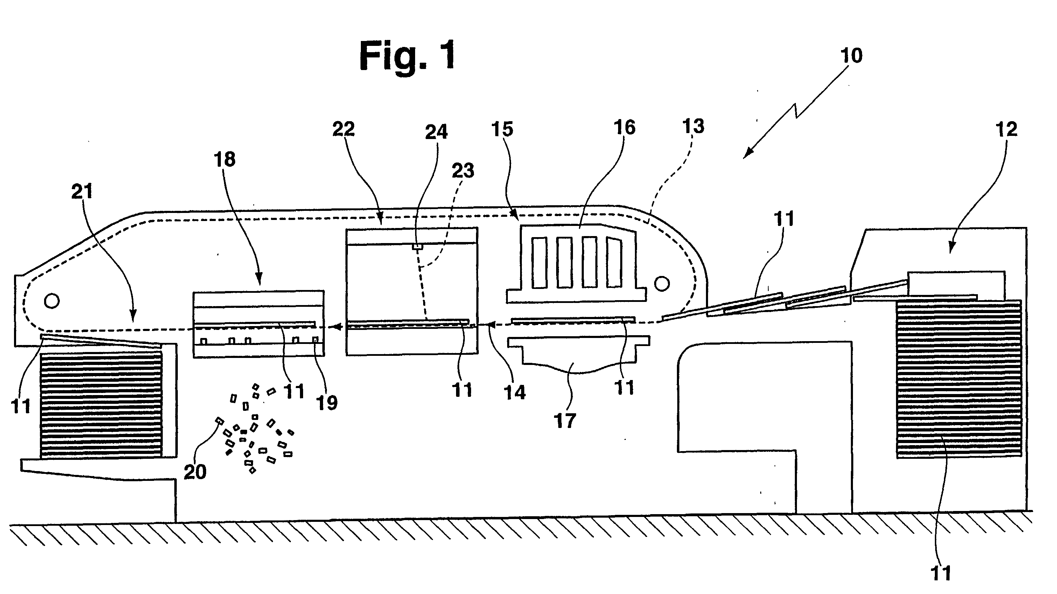

Die in **Fig. 1** gezeigte Bearbeitungsvorrichtung **10** dient zur Bearbeitung von flachen Bögen **11** aus Pappe, Wellpappe oder Karton, die in einer ersten Stapeleinrichtung **12** bevorratet sind. Die Bögen 11 werden auf nicht näher gezeigte Art und Weise von der ersten Stapeleinrichtung 12 einzeln entnommen und einer Fördereinrichtung **13** in Form eines Förderbandes zugeführt, welches die einzelnen Bögen 11 in Förderrichtung **14** durch die Bearbeitungsvorrichtung 10 transportiert. Die vereinzelten Bögen 11 werden zuerst einer mechanischen Bearbeitungseinrichtung **15** in Form einer Stanzeinrichtung mit Matrize **16** und Stempel **17** zugeführt. In dieser Stanzeinrichtung wird aus dem jeweiligen Bogen 11 ein Zuschnitt ausgestanzt. Der mechanischen Bearbeitungseinrichtung 15 nachgeordnet ist eine Laserbearbeitungseinrichtung **22**, deren Laserstrahlung **23** mittels einer z.B. verschwenkbaren Ablenkoptik **24** auf den zu bearbeitenden Bogen 11 gerichtet wird. Indem die Laserstrahlung gemäß einem in der Laserbearbeitungseinrichtung 22 gespeicherten Steuerprogramm computergesteuert auf den zu bearbeitenden Bogen 11 abgelenkt bzw. verfahren wird, werden dort die Schnitt- und/oder Falzlinien des gewünschten Zuschnitts erzeugt. Um die bei der Laserbearbeitung am Bogen 11 auftretende Wärme rasch abführen zu können, weist die Laserbearbeitungseinrichtung 22 als Auflagefläche für den zu bearbeitenden Bogen 11 ein luftdurchlässiges Auflagegitter auf. In Förderrichtung 13 nach der Laserbearbeitungseinrichtung **22** ist eine mechanische Nachbearbeitungseinrichtung **18** mit Auswurfstiften **19** angeordnet, mit denen die aus einem Bogen 11 mechanisch ausgestanzten oder mittels Laserstrahl ausgeschnittenen Ausschußteile **20** entfernt werden können. Danach werden die Bögen 11 in einer zweiten Stapeleinrichtung **21** abgelegt. Anders als im Ausführungsbeispiel der Fig. 1, bei dem die Laserstrahlung 23 von oben auf den Bogen 11 gerichtet ist, kann die Laserstrahlung 23 von unten oder von oben und von unten auf den Bogen 11 gerichtet sein.

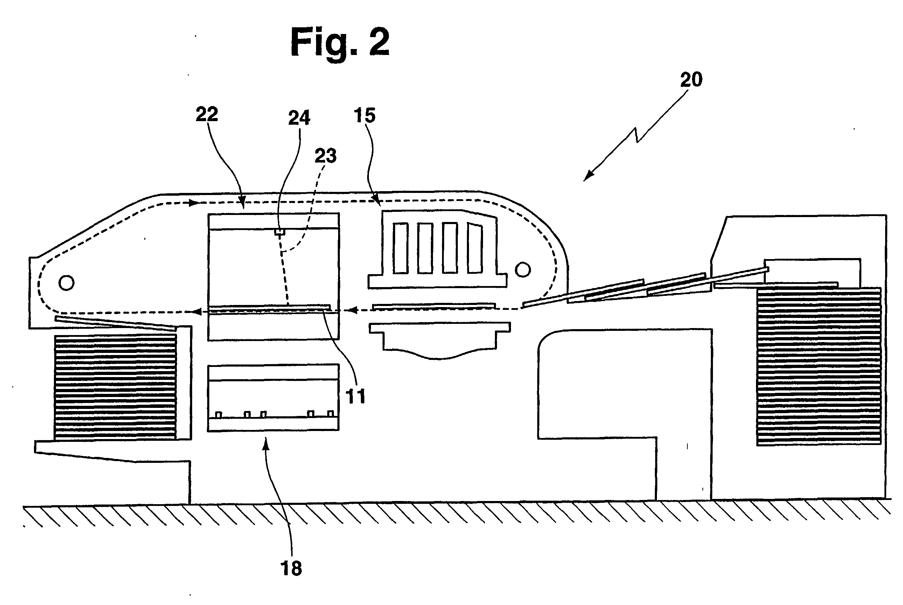

In **Fig. 2** ist eine andere Bearbeitungsvorrichtung **20** gezeigt, bei der die Laserbearbeitungseinrichtung 22 anstelle der mechanischen Nachbearbeitungseinrichtung 18 angeordnet ist und diese Nachbearbeitungseinrichtung 18 aus der Förderebene nach unten verfahren und somit deaktiviert ist. Die mechanische Bearbeitungseinrichtung 15 weist eine Einstellung auf, in der die geförderten Bögen 11 ohne mechanische Bearbeitung zu der Laserbearbeitungseinrichtung 22 weitertransportiert werden. In diesem Fall werden die Bögen nur mittels der Laserbearbeitungseinrichtung 22 bearbeitet.

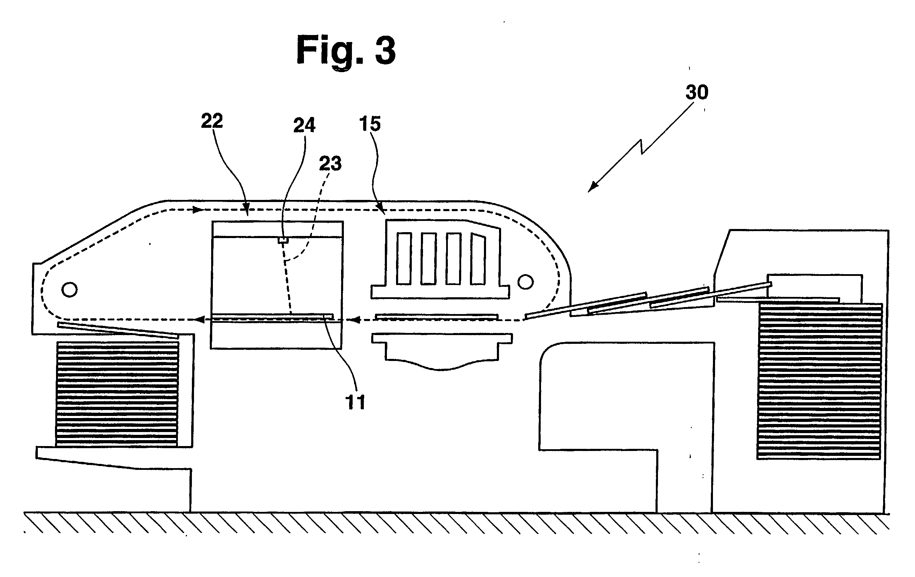

Die in **Fig. 3** gezeigte Bearbeitungsvorrichtung **30** unterscheidet sich von der Bearbeitungsvorrichtung 20 dadurch, daß die mechanische Nachbearbeitungseinrichtung 18 gegen die die Laserbearbeitungseinrichtung 22 ausgetauscht worden ist. Bei der Bearbeitung von Bögen 11 mittels Laserstrahlung 23, d.h. bei geringen Stückzahlen, ist eine mechanische Nachbearbeitung nicht zwingend erforderlich ist. Durch die im Austausch mit der mechanische Nachbearbeitungseinrichtung eingesetzte Laserbearbeitungseinrichtung 22 können auch bereits bestehende Bearbeitungsvorrichtungen einfach und leicht mit einer Laserbearbeitung nachgerüstet werden. Da stets die Rückseiten der Bögen 11 mittels Laserstrahlung bearbeitet werden und damit die Bögen 11 wie üblich mit ihrer bedruckten Seite nach oben aus der Bearbeitungsvorrichtung 30 ausgegeben werden sollen, ist die Laserstrahlung 23 von unten nach oben auf den Bogen 11 zu richten.

## Patentansprüche

1. Vorrichtung (10; 20; 30) zur Bearbeitung von flachen Bögen (11) aus nichtmetallenem Material, wie z.B. Papier, Pappe, Wellpappe, Karton, Kunststoff oder dgl., mit einer ersten Stapeleinrichtung (12) zum Bevorraten von zu bearbeitenden Bögen (11),
mit einer zweiten Stapeleinrichtung (21) zum Ablegen von bearbeiteten Bögen (11),
mit einer Fördereinrichtung (13), die einen Bogen (11) von der ersten Stapeleinrichtung (12) zur zweiten Stapeleinrichtung (21) transportiert,
mit mindestens einer zwischen den beiden Stapeleinrichtungen (12, 21) vorgesehenen Laserbearbeitungseinrichtung (22) zum berührungslosen Bearbeiten eines Bogens (11) mittels Laserstrahlung (23) zum Erzeugen von Schnitt- und/oder Falzlinien und
mit einer mechanischen Bearbeitungseinrichtung zum Bearbeiten eines Bogens (11),
**dadurch gekennzeichnet,**
**daß** die mechanische Bearbeitungseinrichtung als Stanzeinrichtung (15) ausgebildet und zwischen den beiden Stapeleinrichtungen (12, 21) vor oder hinter der mindestens einen Laserbearbeitungseinrichtung (22) angeordnet ist und daß zur Bearbeitung eines Bogens (11) wahlweise die Stanzeinrichtung (15) und/oder die mindestens eine Laserbearbeitungseinrichtung (22) aktivierbar sind.

2. Vorrichtung nach Anspruch 1, **dadurch gekennzeichnet, daß** die mechanische Stanzeinrichtung (15) eine Einstellung aufweist, in der die geförderten Bögen ohne Bearbeitung transportiert werden.

3. Vorrichtung nach Anspruch 1 oder 2, **dadurch gekennzeichnet, daß** die Laserbearbeitungseinrichtung (22) anstelle einer der mechanischen Stanzeinrichtung (15) nachgeordneten, mechanischen oder pneumatischen Nachbearbeitungseinrichtung (18) vorgesehen ist.

4. Vorrichtung nach Anspruch 1 oder 2, **dadurch gekennzeichnet, daß** die Laserbearbeitungseinrichtung (22) zwischen der mechanischen Stanzeinrichtung (15) und einer nachgeordneten, mechanischen oder pneumatischen Nachbearbeitungseinrichtung (18) vorgesehen ist.

5. Vorrichtung nach Anspruch 4, **dadurch gekennzeichnet, daß** die mechanische Stanzeinrichtung (15) und/oder die mechanische oder pneumatische Nachbearbeitungseinrichtung (18) jeweils eine Einstellung aufweisen, in der die geförderten Bögen (11) ohne Bearbeitung transportiert werden.

6. Vorrichtung nach Anspruch 1 oder 2, **dadurch gekennzeichnet, daß** die Laserbearbeitungseinrichtung (22) in eine der mechanischen Stanzeinrichtung (15) nachgeordnete, mechanische oder pneumatische Nachbearbeitungseinrichtung (18) einsetzbar ist und die Nachbearbeitungseinrichtung (18) bei eingesetzter Laserbearbeitungseinrichtung (22) deaktiviert ist.

7. Vorrichtung nach einem der vorhergehenden Ansprüche, **dadurch gekennzeichnet, daß** die Laserbearbeitungseinrichtung (22) eine bewegliche Ablenkoptik (24) aufweist, die die Laserstrahlung (23) computergesteuert auf den zu bearbeitenden Bogen (11) ablenkt.

8. Vorrichtung nach einem der vorhergehenden Ansprüche, **dadurch gekennzeichnet, daß** der Bearbeitungskopf der Laserbearbeitungseinrichtung (22) oberhalb und/oder unterhalb eines zu bearbeitenden Bogens (11) angeordnet ist.

9. Vorrichtung nach einem der vorhergehenden Ansprüche, **dadurch gekennzeichnet, daß** die Laserbearbeitungseinrichtung (22) mehrere Bearbeitungsköpfe aufweist, die oberhalb und/oder unterhalb eines zu bearbeitenden Bogens (11) angeordnet sind.

## Claims

1. Device (10; 20; 30) for processing flat sheets (11) of non-metal material such as e.g. paper, paperboard, corrugated board, cardboard, plastic material or the like, comprising a first piling means (12) for storing sheets (11) to be processed, a second piling means (21) for laying down processed sheets (11), a transport means (13) which transports a sheet (11) from the first piling means (12) to the second pilling means (21), at least one laser processing means (22), disposed between the two piling means (12, 21) for contact-free processing of a sheet (11) using laser radiation (23) to produce cutting folding and/or folding lines; and a mechanical processing means for processing a sheet (11), **characterized in that** the mechanical processing means is designed as punching means (15) and is disposed between the two piling means (12, 21) before or behind the at least one laser processing means (22) and that for processing of a sheet (11) alternatively the punching means (15) and/or the at least one laser processing means (22) can be activated.

2. Device according to claim 1, **characterized in that** the mechanical punching means (15) comprises one setting, in which the supplied sheets are transported without being processed.

3. Device according to claim 1 or 2, **characterized in that** the laser processing means (22) is provided instead of a mechanical or pneumatic post-processing means (18) disposed downstream of the mechanical punching means (15).

4. Device according to claim 1 or 2, **characterized in that** the laser processing means (22) is provided between the mechanical punching means (15) and a downstream mechanical or pneumatic post-processing means (18).

5. Device according to claim 4, **characterized in that** the mechanical punching means (15) and/or the mechanical or pneumatic post-processing means (18) each have one setting in which the supplied sheets (11) are transported without being processed.

6. Device according to claim 1 or 2, **characterized in that** the laser processing means (22) can be inserted into a mechanical or pneumatic post-processing means (18) which is disposed downstream of the mechanical punching means (15) and the post-processing means (18) is deactivated when the laser processing means (22) is used.

7. Device according to any one of the preceding claims, **characterized in that** the laser processing means (22) comprises a movable deflection optics (24) which deflects the laser radiation (23) to the sheet (11) to be processed through computer control.

8. Device according to any one of the preceding claims, **characterized in that** the processing head of the laser processing means (22) is disposed above and/or below a sheet (11) to be processed.

9. Device according to any one of the preceding claims, **characterized in that** the laser processing means (22) comprises several processing heads which are disposed above and/or below a sheet (11) to be processed.

## Revendications

1. Dispositif (10;20;30) pour traiter des feuilles planes (11) réalisées en un matériau non métallique, comme par exemple du papier, du carton, du carton ondulé, une matière plastique ou analogue, comportant un premier dispositif d'empilage (12) pour réaliser l'alimentation de feuilles à traiter (11), comportant
un second dispositif d'empilage (21) pour déposer des feuilles devant être traitées (11),
un dispositif de convoyage (13), qui transporte une feuille (11) depuis le premier dispositif d'empilage (12) en direction du second dispositif d'empilage (21),
au moins un dispositif de traitement par laser (22) prévu entre les deux dispositifs d'empilage (12,21) pour traiter sans contact une feuille (11) à l'aide d'un rayonnement laser (23) pour produire des lignes de découpage et/ou des lignes de pliage, et
un dispositif de traitement mécanique pour traiter une feuille (11),
**caractérisé en ce**
**que** le dispositif de traitement mécanique est agencé sous la forme d'un dispositif de découpage (11) et est disposé entre les deux dispositifs d'empilage (12,21) en amont ou en aval du au moins un dispositif de traitement laser (22) et que pour le traitement d'une feuille (11), on peut activer au choix le dispositif de découpage (15) et/ou le au moins un dispositif de traitement par laser (22).

2. Dispositif selon la revendication 1, **caractérisé en ce que** le dispositif de découpage mécanique (15) possède une unité de réglage, dans laquelle les feuilles convoyées peuvent être transportées sans traitement.

3. Dispositif selon la revendication 1 ou 2, **caractérisé en ce que** le dispositif de traitement par laser (22) est prévu à la place d'un dispositif de post-traitement mécanique ou pneumatique (18), disposé en aval du dispositif de découpage mécanique (15).

4. Dispositif selon la revendication 1 ou 2, **caractérisé en ce que** le dispositif de traitement par laser (22) est prévu entre le dispositif de découpage mécanique (15) et un dispositif mécanique ou pneumatique de post-traitement (18) disposé en aval.

5. Dispositif selon la revendication 4, **caractérisé en ce que** le dispositif de découpage mécanique (15) et/ou le dispositif de post-traitement mécanique ou pneumatique (18) possèdent chacun une unité de réglage, dans laquelle les feuilles convoyées (11) sont transportées sans subir aucun traitement.

6. Dispositif selon la revendication 1 ou 2, **caractérisé en ce que** le dispositif de traitement par laser (22) peut être inséré dans un dispositif de post-traitement mécanique ou pneumatique (18), disposé en aval du dispositif de découpage mécanique (15), et le dispositif de post-traitement (18) est désactivé lorsque le dispositif de traitement par laser (22) est utilisé.

7. Dispositif selon l'une des revendications précédentes, **caractérisé en ce que** le dispositif de traitement par laser (22) comporte un système optique mobile de déviation (24), qui fait dévier le rayonnement laser (23), d'une manière commandée par ordinateur, en direction de la feuille à traiter (11).

8. Dispositif selon l'une des revendications précédentes, **caractérisé en ce que** la tête de traitement du dispositif de traitement par laser (22) est disposée au-dessus et/ou au-dessous d'une feuille à traiter (11).

9. Dispositif selon l'une des revendications précédentes, **caractérisé en ce que** le dispositif de traitement par laser (22) comporte plusieurs têtes de traitement, qui sont disposées au-dessus et/ou au-dessous d'une feuille à traiter (11).
